# EUROPEAN PATENT APPLICATION

(11) **EP 4 618 018 A1**
(43) Date of publication of application: **17.09.2025**
(21) Application number: 25159948.6
(22) Date of filing: 25.02.2025
(51) Int. Cl.: G06T 7/38, G06T 7/70

(54) **DATA GENERATION DEVICE, DATA GENERATION METHOD, DATA GENERATION PROGRAM, AND TRAFFIC SERVICE PROVIDING SYSTEM**

(30) Priority: 29.02.2024 JP 2024030137
(71) Applicant: TOYOTA JIDOSHA KABUSHIKI KAISHA, Toyota-shi, Aichi-ken, 471-8571 (JP)
(72) Inventor: YOSHIDA, Kaoru, Toyota-shi, 471-8571 (JP); KAKUTANI, Masatoshi, Toyota-shi, 471-8571 (JP); OKUDA, Masataka, Toyota-shi, 471-8571 (JP); SHINOHARA, Toshiki, Toyota-shi, 471-8571 (JP); KURIYAMA, Kanade, Toyota-shi, 471-8571 (JP)
(74) Representative: J A Kemp LLP

(57) **Abstract**

A data generation device includes a communication device and processing circuitry. The communication device is configured to obtain, from sensors, observational datasets that have been obtained by continuously observing an object from different positions. The processing circuitry is configured to select reference data based on accuracy information related to the observational datasets, and generate a synchronized observational dataset by synchronizing the observational datasets with each other based on the reference data. The synchronized observational dataset is configured to be used to calculate a position of the object corresponding to a point in time after the observational datasets were obtained.

## Description

### BACKGROUND

### 1. Field

The present disclosure relates to a data generation device, a data generation method, and a data generation program for generating a dataset that is obtained by synchronizing observational datasets in the real world necessary for re-creation in a system that re-creates real-world traffic environments in a virtual space. The present disclosure also relates to a traffic service providing system that uses a synchronized observational dataset.

### 2. Description of Related Art

A digital twin is a technology that re-creates an environment identical to the real world in a virtual space. Particularly, a digital twin that re-creates real-world traffic environments in a virtual space is referred to as a traffic digital twin.

When constructing a digital twin using observational datasets, the observational datasets need to be synchronized with each other. Japanese Laid-Open Patent Publication No. 2020-160568 discloses a technology for synchronizing observational datasets obtained by capture from various viewpoints.

In the above-mentioned publication, the selection of reference data does not take data accuracy into account. If the reference data is chosen without considering its accuracy, there is a risk that the accuracy of a synchronized observational dataset may decrease depending on the accuracy of the selected reference data.

### SUMMARY

This Summary is provided to introduce a selection of concepts in a simplified form that are further described below in the Detailed Description. This Summary is not intended to identify key characteristics or essential characteristics of the claimed subject matter, nor is it intended to be used as an aid in determining the scope of the claimed subject matter.

A data generation device according to an aspect of the present disclosure includes a communication device and processing circuitry. The communication device is configured to obtain, from sensors, observational datasets that have been obtained by continuously observing an object from different positions. The processing circuitry is configured to select reference data based on accuracy information related to the observational datasets, and generate a synchronized observational dataset by synchronizing the observational datasets with each other based on the reference data. The synchronized observational dataset is configured to be used to calculate a position of the object corresponding to a point in time after the observational datasets were obtained.

A data generation method according to an aspect of the present disclosure includes obtaining, from sensors, observational datasets that have been obtained by continuously observing an object from different positions. The data generation method includes selecting reference data based on accuracy information related to the observational datasets. The data generation method includes generating a synchronized observational dataset by synchronizing the observational datasets with each other based on the reference data. The synchronized observational dataset is configured to be used to calculate a position of the object corresponding to a point in time after the observational datasets were obtained.

A data generation program according to an aspect of the present disclosure is configured to cause a communication device to execute obtaining, from sensors, observational datasets that have been obtained by continuously observing an object from different positions. The data generation program is configured to cause processing circuitry to execute selecting reference data based on accuracy information related to the observational datasets. The data generation program is configured to cause the processing circuitry to generate a synchronized observational dataset by synchronizing the observational datasets with each other based on the reference data. The synchronized observational dataset is configured to be used to calculate a position of the object corresponding to a point in time after the observational datasets were obtained.

A traffic service providing system according to an aspect of the present disclosure includes a data generation device, a controller, and providing devices. The data generation device includes a communication device and processing circuitry. The communication device is configured to obtain, from sensors, observational datasets that have been obtained by continuously observing an object from different positions. The processing circuitry is configured to select reference data based on accuracy information related to the observational datasets, and generate a synchronized observational dataset by synchronizing the observational datasets with each other based on the reference data. The synchronized observational dataset is configured to be used to calculate a position of the object corresponding to a point in time after the observational datasets were obtained. The data generation device is configured to send the synchronized observational dataset to the controller. The controller is configured to generate predicted moving body information using the received synchronized observational dataset. The controller and the providing devices are configured to communicate with each other, thereby providing a traffic service that assists a user of each of the providing devices based on the predicted moving body information.

Other features and aspects will be apparent from the following detailed description, the drawings, and the claims.

### BRIEF DESCRIPTION OF THE DRAWINGS

Fig. 1 is a schematic diagram illustrating the configuration of a traffic service providing system according to an embodiment.
Fig. 2 is a sequence diagram illustrating the communication executed by the vehicle, the controller, the data generation device, and the roadside camera in the traffic service providing system shown in Fig. 1.
Fig. 3 is a flowchart illustrating the flow of processes executed by the data generation device in the traffic service providing system shown in Fig. 1.
Fig. 4 is a diagram illustrating an example of obtaining observational datasets using roadside cameras of the traffic service providing system shown in Fig. 1.
Fig. 5 is a diagram illustrating the first still image dataset obtained by the first roadside camera shown in Fig. 4.
Fig. 6 is a schematic diagram illustrating the positions of the first vehicle and the second vehicle calculated by the data generation device from the first still image dataset shown in Fig. 5.
Fig. 7 is a diagram illustrating the second still image dataset obtained by the second roadside camera shown in Fig. 4.
Fig. 8 is a schematic diagram illustrating the positions of the first vehicle and the second vehicle calculated by the data generation device from the second still image dataset shown in Fig. 7.
Fig. 9 is a schematic diagram illustrating the relationship between the video datasets before the synchronization process has been executed by the data generation device in Fig. 1.
Fig. 10 is a schematic diagram illustrating the synchronized observational datasets synchronized by the data generation device of Fig. 1.

Throughout the drawings and the detailed description, the same reference numerals refer to the same elements. The drawings may not be to scale, and the relative size, proportions, and depiction of elements in the drawings may be exaggerated for clarity, illustration, and convenience.

### DETAILED DESCRIPTION

This description provides a comprehensive understanding of the methods, apparatuses, and/or systems described. Modifications and equivalents of the methods, apparatuses, and/or systems described are apparent to one of ordinary skill in the art. Sequences of operations are exemplary, and may be changed as apparent to one of ordinary skill in the art, with the exception of operations necessarily occurring in a certain order. Descriptions of functions and constructions that are well known to one of ordinary skill in the art may be omitted.

Exemplary embodiments may have different forms, and are not limited to the examples described. However, the examples described are thorough and complete, and convey the full scope of the disclosure to one of ordinary skill in the art.

In this specification, "at least one of A and B" should be understood to mean "only A, only B, or both A and B."

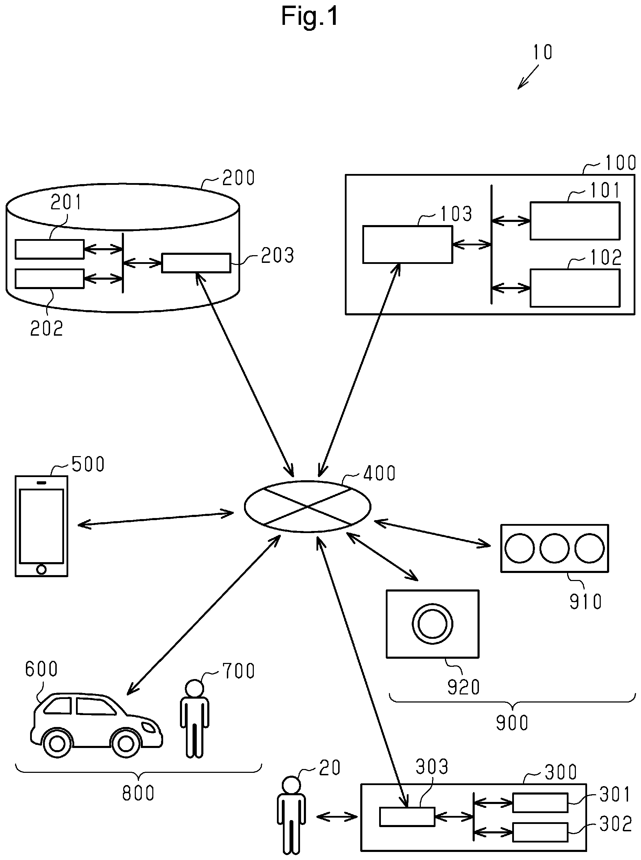

An embodiment of a traffic service providing system 10 and a data generation device 100 of the traffic service providing system 10 will now be described with reference to Figs. 1 to 10.

Overview of Traffic Service Providing System 10

Referring to Fig. 1, the traffic service providing system 10 includes a data generation device 100, a controller 200, a providing device 300, an external communication network 400, and sensors. The data generation device 100, the controller 200, and the sensors are connected to each other in a manner that allows communication between them via the external communication network 400. The controller 200 and the providing device 300 are connected to each other in a manner that allows communication between them via the external communication network 400.

The data generation device 100 includes first processing circuitry 101, a first storage device 102, and a first communication device 103. The first storage device 102 stores a data generation program. The first processing circuitry 101 executes the data generation program stored in the first storage device 102 to execute various processes. The first processing circuitry 101 includes one or more processors. The data generation device 100 is connected to the external communication network 400 via the first communication device 103.

The controller 200 includes second processing circuitry 201, a second storage device 202, and a second communication device 203. The second storage device 202 stores a program. The second processing circuitry 201 executes the program stored in the second storage device 202 to execute various processes. The second processing circuitry 201 includes one or more processors. The controller 200 is connected to the external communication network 400 via the second communication device 203.

The providing device 300 includes third processing circuitry 301, a third storage device 302, and a third communication device 303. The third storage device 302 stores a program. The third processing circuitry 301 executes the program stored in the third storage device 302 to execute various processes. The third processing circuitry 301 includes one or more processors. The providing device 300 is connected to the external communication network 400 via the third communication device 303.

Each of the first processing circuitry 101, the second processing circuitry 201, and the third processing circuitry 301 may include hardware circuitry including one or more dedicated hardware circuits such as an application-specific integrated circuit (ASIC) that execute at least some of the various processes or a combination thereof. Alternatively, each of the first processing circuitry 101, the second processing circuitry 201, and the third processing circuitry 301 may include a combination of one or more processors and one or more dedicated hardware circuits. Each of the first storage device 102, the second storage device 202, and the third storage device 302 includes a memory such as a RAM and a ROM. The memory, or a computer-readable medium, includes any type of media that are accessible by general-purpose computers and dedicated computers.

The sensors of the traffic service providing system 10 will now be described.

Sensors of Traffic Service Providing System 10

The sensors of the traffic service providing system 10 collect moving body information, which indicates the positions and behaviors of moving bodies 800 in the real world, at multiple points in time. The moving bodies 800 are objects that move in the real world. Examples of the moving body 800 include a vehicle 600, a pedestrian 700, a bicycle, and an animal. The vehicle 600 includes a motorcycle.

The vehicle 600 collects moving body information using a vehicle on-board sensor. That is, the vehicle 600 serves as a sensor. Examples of the vehicle on-board sensor of the vehicle 600 include a vehicle speed sensor, an accelerator sensor, a brake sensor, a steering sensor, and an acceleration sensor. The acceleration sensor is, for example, an inertial measurement unit (IMU).

The vehicle 600 further includes an external camera, a sonar, and a position information acquisition system as the vehicle on-board sensor. The external camera and the sonar mounted on the vehicle 600 collect information related to the distance between the vehicle 600 and one or more other objects located around the vehicle 600, thereby generating an observational dataset. The vehicle 600 may include a light detection and ranging (LiDAR) sensor as a sensor that has the same features as those of the external camera and the sonar. Examples of the position information acquisition system include a global navigation satellite system (GNSS), a real-time kinematic (RTK)-enabled device, and a LiDAR sensor. The vehicle 600 sends the moving body information collected by the vehicle on-board sensors via the external communication network 400.

The information processing terminal 500, which is carried by the pedestrian 700, collects the position information of the pedestrian 700. That is, the information processing terminal 500 carried by the pedestrian 700 serves as a sensor. Examples of the information processing terminal 500 carried by the pedestrian 700 include a smartphone carried by the pedestrian 700. Examples of the information processing terminal 500 further include a wearable device and a tablet device. Examples of the wearable terminal include a ring-type terminal worn on the wrist and a necklace-type terminal worn around the neck.

The roadside sensors 900 are installed on the road. The roadside sensors 900 include, for example, traffic signals 910, roadside cameras 920, and LiDAR sensors installed on the roadside.

Each traffic signal 910 provides information related to changes in the state of the traffic infrastructure, such as the time at which the traffic signal 910 turns green and the time during which the traffic signal 910 remains green, to the controller 200.

Each roadside camera 920 collects moving body information around it. Examples of the roadside cameras 920 include visible light cameras and infrared cameras. The roadside camera 920 acquires observational datasets arranged in chronological order by continuously observing the moving body 800 at fixed time intervals. The LiDAR sensors installed on the road acquire point cloud datasets arranged in chronological order, by continuously observing the moving body 800 at fixed time intervals.

### Features of Controller 200

The controller 200 periodically acquires the moving body information related to multiple moving bodies 800 via the second communication device 203 from multiple information processing terminals 500, multiple vehicles 600, and multiple roadside sensors 900. The points in time at which the controller 200 acquires the moving body information related to each moving body 800 may differ from one another.

The controller 200 collects moving body information, including, for example, vehicle information (e.g., a vehicle identification number (VIN) of the vehicle 600) and information related to the vehicle 600 (e.g., a vehicle speed, a travel direction, and a travel route and a position).

The controller 200 stores the moving body information related to each moving body 800 in the second storage device 202, associating with the point in time at which it was acquired. The second processing circuitry 201 of the controller 200 uses the moving body information stored in the second storage device 202 to calculate predicted moving body information, which indicates the position of each moving body 800 after the point in time at which the moving body information was acquired. The predicted moving body information re-creates the real-world traffic environment in a virtual space.

The controller 200 communicates with multiple providing devices 300 via the external communication network 400. For example, the controller 200 generates a control signal for each providing device 300 based on the predicted moving body information. The controller 200 sends each control signal to the corresponding providing device 300.

Upon receiving the control signal, the providing device 300 provides traffic services to the user 20 of the providing device 300 based on the control signal. That is, the traffic service providing system 10 provides traffic services to assist the user 20 of each of the providing devices 300 based on the predicted moving body information.

### Example of Providing Device 300

The vehicle 600 provides traffic services to the user 20 of the vehicle 600 based on the control signals sent from the controller 200. That is, the vehicle 600 serves as the providing device 300.

The vehicle 600 includes vehicle on-board processing circuitry, a braking system, a steering system, directional indicators, speakers, and displays. The displays of the vehicle 600 display traffic services for the user 20 of the vehicle 600. For example, the vehicle on-board processing circuitry uses the predicted moving body information to display a vehicle approach notification or traffic information on the displays of the vehicle 600. For example, the vehicle on-board processing circuitry uses the predicted moving body information to issue a vehicle approach alert to the user 20 of the vehicle 600 via the speakers of the vehicle 600.

For example, the vehicle on-board processing circuitry uses the predicted moving body information to control the braking system of the vehicle 600, thereby decelerating or stopping the vehicle 600. For example, the vehicle on-board processing circuitry uses the predicted moving body information to control the steering system of the vehicle 600, thereby controlling the steering of the vehicle 600. The vehicle on-board processing circuitry may also control the directional indicators in addition to controlling the steering.

The information processing terminal 500 provides traffic services to the user 20 of the information processing terminal 500 based on the control signals sent from the controller 200. That is, the information processing terminal 500 serves as the providing device 300. Examples of the information processing terminal 500, which serves as the providing device 300, include a smartphone carried by the user 20 of the vehicle 600. For example, the information processing terminal 500 uses the predicted moving body information to display a vehicle approach notification or traffic information on the display of the information processing terminal 500.

### Features of Data Generation Device 100

Depending on the type of traffic service that the providing device 300 provides to the user 20, predicted moving body information that is highly accurate may be required. For example, for the controller 200 to generate control signals that cause the vehicle on-board processing circuitry of the vehicle 600 to execute steering control, highly accurate predicted moving body information is required. Such information allows the controller 200 to accurately acquire the position and behavior of an object around the vehicle 600 in addition to the position and behavior of the vehicle 600.

To improve the accuracy of the predicted moving body information, the controller 200 acquires a synchronized observational dataset from the data generation device 100. Based on the moving body information stored in the second storage device 202 and the synchronized observational dataset, the controller 200 generates highly accurate predicted moving body information.

The data generation device 100 generates a synchronized observational dataset. The synchronized observational dataset is an observational dataset in which the points in time have been synchronized based on reference data. The reference data is selected from the data included in observational datasets based on accuracy information.

The first communication device 103 of the data generation device 100 obtains multiple observational datasets from multiple roadside cameras 920 via the external communication network 400. The observational datasets are obtained by continuously observing, from different positions, two or more objects that have a changing distance between them. This indicates that multiple observational datasets are also obtained by observing the same moving body 800 from multiple viewpoints. Synchronizing the above-described observational datasets generates observational datasets in which the position and behavior of the moving body 800 were observed at the same point in time from multiple viewpoints.

If the data generation device 100 synchronizes observational datasets using low-accuracy reference data from which the position of an object subject to observation is not accurately identifiable, the accuracy of the position of the moving body 800 in the synchronized observational datasets would decrease. This would also lower the accuracy of the predicted moving body information generated based on the synchronized observational datasets. To solve this problem, the data generation device 100 executes a synchronization process, which will be described later, to generate a synchronized observational dataset to limit the decrease in the accuracy of the position of the moving body 800.

### Communication in Traffic Service Providing System 10

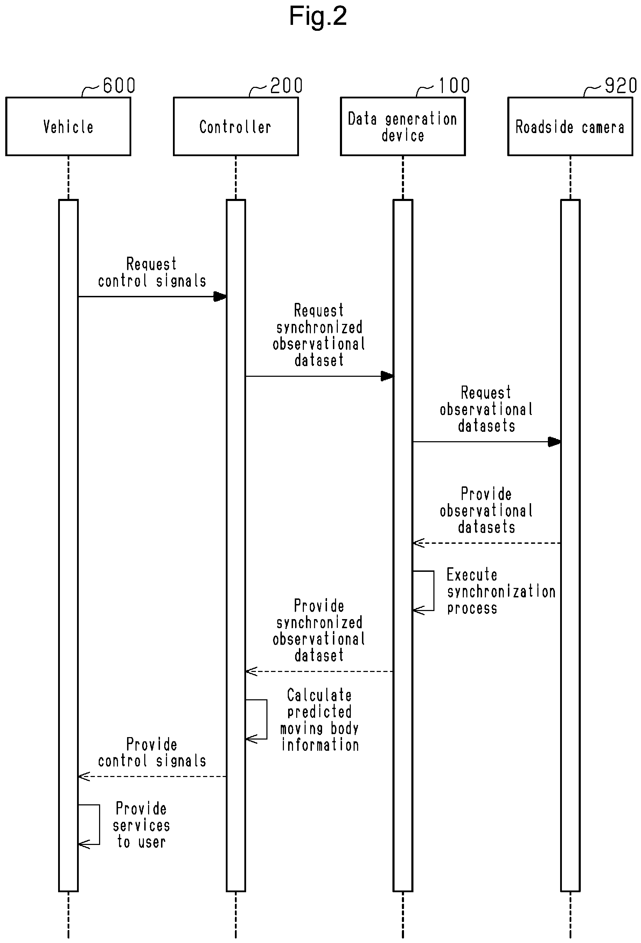

Fig. 2 illustrates the communication executed by the vehicle 600, which serves as the providing device 300, the controller 200, the data generation device 100, and the roadside camera 920 when a synchronized observational dataset is required in the traffic service providing system 10 of the embodiment.

In the example of Fig. 2, the user 20 of the vehicle 600 requests that the vehicle 600 provide traffic services. Upon being requested by the user 20 to provide traffic services, the vehicle 600 sends a request for control signals to the controller 200.

The controller 200 determines whether a synchronized observational dataset is necessary to generate the requested control signals. When determining that a synchronized observational dataset is necessary, the controller 200 requests the synchronized observational dataset from the data generation device 100.

Upon receiving a request for a synchronized observational dataset, the data generation device 100 requests observational datasets from multiple roadside cameras 920. In this case, the data generation device 100 selects, from the roadside cameras 920, those installed in areas where the acquisition of information beneficial for providing traffic services to the vehicle 600 is expected. The data generation device 100 requests observational datasets from the selected roadside cameras 920. Upon receiving a request for observational datasets, each roadside camera 920 sends the observational datasets to the data generation device 100. Based on accuracy information, the data generation device 100 selects reference data from the data contained in the received observational datasets. The data generation device 100 executes the synchronization process to synchronize the points in time of multiple observational datasets based on the reference data, thereby generating a synchronized observational dataset. The data generation device 100 sends the synchronized observational dataset to the controller 200.

Upon receiving the synchronized observational dataset, the controller 200 generates predicted moving body information based on the moving body information stored in the second storage device 202 and the synchronized observational dataset. The controller 200 generates control signals based on the predicted moving body information. The controller 200 sends the control signals to the vehicle 600.

The vehicle 600 provides traffic services to the user 20 based on the acquired control signals.

### Processes Executed by Data Generation Device 100

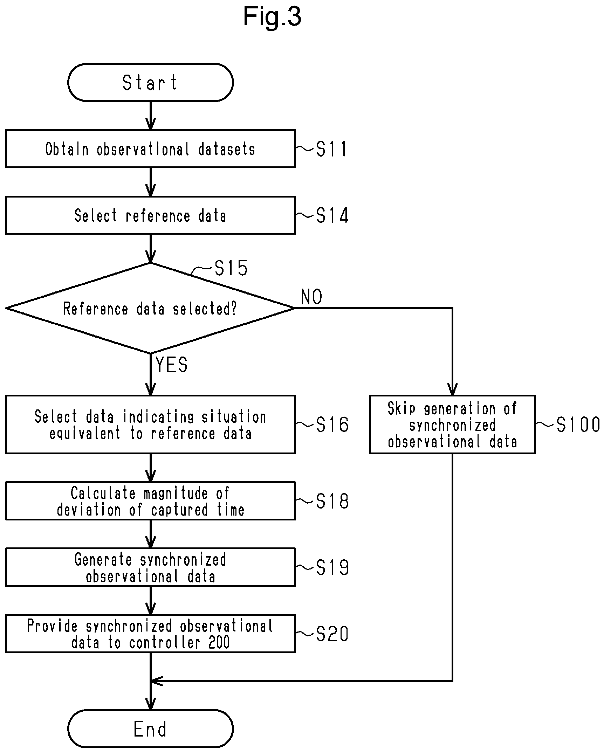

The flow of the synchronization process, in which the data generation device 100 generates a synchronized observational dataset, will now be described in detail with reference to Figs. 3 to 10.

Fig. 3 is a flowchart illustrating a series of processes executed by the data generation device 100 in the traffic service providing system 10.

The first storage device 102 of the data generation device 100 stores a data generation program that instructs the first processing circuitry 101 to execute the series of processes. The data generation device 100 executes the series of processes shown in Fig. 3 in accordance with the data generation program stored in the first storage device 102. The data generation device 100 executes the series of processes when receiving a request for a synchronized observational dataset from the controller 200 via the first communication device 103.

As shown in Fig. 3, upon initiating the series of processes, the data generation device 100 acquires multiple observational datasets, which have been obtained through continuous observation, over a predetermined period of time from multiple roadside cameras 920 via the first communication device 103 in step S11. Continuous observation refers to the act of carrying out observations continuously at fixed time intervals. In the process of step S11, the data generation device 100 selects, from the roadside cameras 920, those installed in areas where the acquisition of information beneficial for providing traffic services to the vehicle 600 is expected. The data generation device 100 requests the observational datasets obtained through continuous observation from the selected roadside cameras 920. Thus, upon receiving a request for the observational datasets, each roadside camera 920 starts to send video datasets to the data generation device 100. The data generation device 100 acquires the observational datasets during a predetermined period of time after requesting the observational datasets.

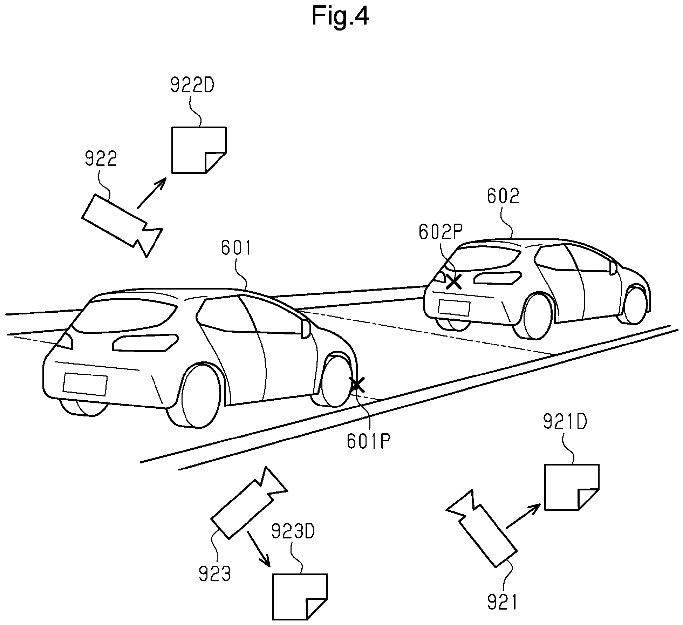

The observational datasets acquired by the roadside cameras 920 will now be described in detail with reference to Fig. 4.

Fig. 4 is a schematic diagram illustrating an example of the acquisition of the observational datasets from the roadside cameras 920. Two or more objects that have a changing distance between them correspond to a first vehicle 601 and a second vehicle 602. The roadside cameras 920 that continuously observe the first vehicle 601 and the second vehicle 602 from different positions refer to a first roadside camera 921, a second roadside camera 922, and a third roadside camera 923. The first roadside camera 921, the second roadside camera 922, and the third roadside camera 923 are visible light cameras that capture color images at a predetermined frame rate. The first roadside camera 921, the second roadside camera 922, and the third roadside camera 923 each acquire a video dataset. The video dataset corresponds to an observational dataset obtained through continuous observation. The video dataset also records the information related to the point in time when the roadside camera 920 obtained the video dataset. The video dataset is a collection of still image datasets arranged in chronological order. Each still image dataset included in the video dataset also records a capture time.

The video dataset captured by the first roadside camera 921 is defined as the first video dataset 921D. The video dataset captured by the second roadside camera 922 is defined as the second video dataset 922D. The video dataset captured by the third roadside camera 923 is referred to as the third video dataset 923D.

The first roadside camera 921 sends the first video dataset 921D to the data generation device 100 via the external communication network 400. The second roadside camera 922 sends the second video dataset 922D to the data generation device 100 via the external communication network 400. The third roadside camera 923 sends the third video dataset 923D to the data generation device 100 via the external communication network 400. When the data generation device 100 requests observational datasets and then a predetermined period of time elapses, the data generation device 100 advances the process to step S14.

In step S14, the data generation device 100 selects as reference data, from the first video dataset 921D, the second video dataset 922D, and the third video dataset 923D, a still image dataset in which the first vehicle 601 and the second vehicle 602 are clearly captured. That is, the data generation device 100 selects the reference data from multiple observational datasets acquired via the first communication device 103 based on accuracy information.

### Method for Selecting Reference Data

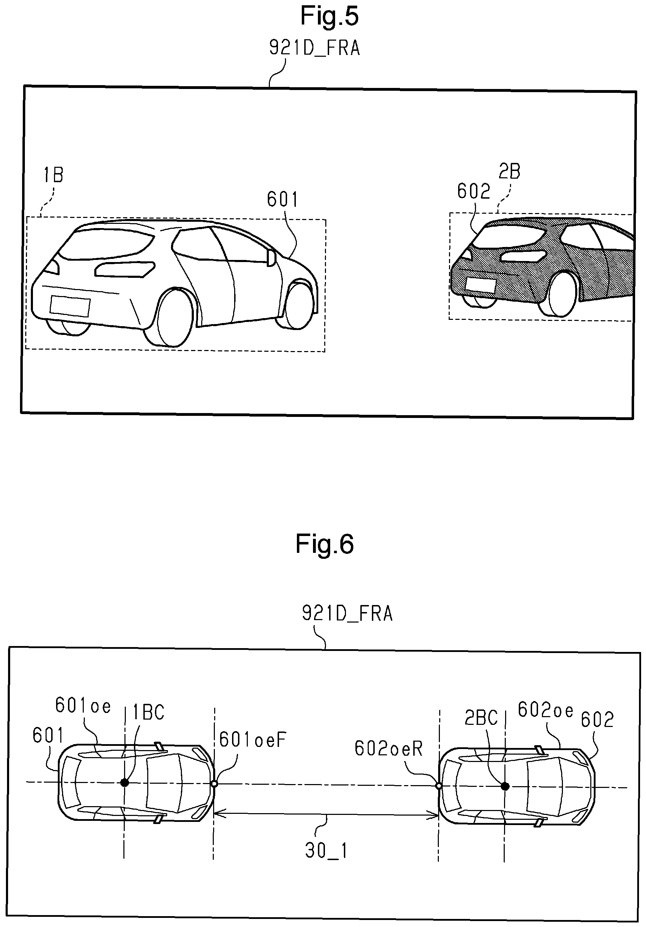

The method by which the data generation device 100 selects the reference data in step S14 will now be described in detail with reference to Figs. 5 and 6.

In the embodiment, the still image dataset shown in Fig. 5 is a first still image dataset 921D_FRA included in the first video dataset 921D, which was captured by the first roadside camera 921. The first still image dataset 921D_FRA clearly shows the first vehicle 601 and the second vehicle 602 as depicted in Fig. 4. The first still image dataset 921D_FRA records the capture time at which the first roadside camera 921 obtained the first still image dataset 921D_FRA.

The first processing circuitry 101 uses a known image recognition algorithm to execute a process on the still image dataset included in each of the first video dataset 921D, the second video dataset 922D, and the third video dataset 923D. In this process, the first processing circuitry 101 detects an object included in each still image dataset and sets a detection frame for the detected object. The detection frame may be referred to as a bounding box. The detection frame is the smallest rectangular frame that contains the entire object subject to detection. For example, the first processing circuitry 101 may use a pre-trained machine learning model to set a detection frame for the object in a still image dataset. The first processing circuitry 101 may detect an object through template matching with various sample images and then set a detection frame surrounding the detected object. In the first still image dataset 921D_FRA shown in Fig. 5, each detection frame is indicated by a dotted line. The detection frames in the first still image dataset 921D_FRA include a first detection frame 1B and a second detection frame 2B.

Next, the first processing circuitry 101 determines whether the still image dataset includes two or more objects that have a changing distance between them. For example, when two detection frames that have a changing distance between them exist between two chronologically-ordered still image datasets obtained through continuous observation, the first processing circuitry 101 identifies the objects respectively contained by the two detection frames as two objects that have a changing distance between them. The first detection frame 1B and the second detection frame 2B in the first still image dataset 921D_FRA, as shown in Fig. 5, correspond to the two detection frames that have a changing distance between them. That is, the first still image dataset 921D_FRA includes two or more objects that have a changing distance between them.

Subsequently, the first processing circuitry 101 executes edge detection on objects within two or more detection frames that have a changing distance between them in the still image dataset. This enables the data generation device 100 to determine whether the contours of the object included within each detection frame of the still image dataset are clear. Whether the contours clear is one aspect of accuracy information.

In edge detection, the first processing circuitry 101 converts the target still image dataset into grayscale. The first processing circuitry 101 detects edges, which are areas where the gradient of pixel intensity changes rapidly, within the detection frame of the still image dataset converted to grayscale. For example, the first processing circuitry 101 calculates the gradient of pixel values for the pixels within the detection frame based on the differences in pixel values in the horizontal and vertical directions. When the gradient of the pixel value of a pixel is greater than or equal to a determination value, the first processing circuitry 101 determines the pixel as an edge. Examples of the pixel value include the brightness of a pixel. The first processing circuitry 101 may execute edge detection using known techniques, such as a Laplacian filter or the Canny method.

The still image data with a large number of detected edges within the detection frame shows clear contours of the object within the detection frame. The first processing circuitry 101 determines that the still image dataset is sharp when the edges detected in the object within the detection frame have an image that is greater than a predetermined threshold value. For example, the first processing circuitry 101 executes edge detection to determine that the first still image dataset 921D_FRA shown in Fig. 5 is sharp.

The data generation device 100 identifies the type and position of each object within the detection frame and identifies the distances between the detected objects from a sharp still image dataset. The data generation device 100 executes this process to select reference data. The first processing circuitry 101 executes this process on the first still image dataset 921D_FRA, as shown in Fig. 5. Examples of the type of objects include vehicles, humans, animals, installations on roads, and buildings.

The first processing circuitry 101 uses the above-described image recognition algorithm to identify the objects contained within the first detection frame 1B as the first vehicle 601. Similarly, the first processing circuitry 101 uses the image recognition algorithm to identify the objects contained within the second detection frame 2B as the second vehicle 602. To identify objects within the detection frame, the first processing circuitry 101 uses position information of the first vehicle 601 and the second vehicle 602, which the controller 200 has acquired, and the information indicating the position of the roadside cameras 920. Based on these types of information, the first processing circuitry 101 calculates a reference point, on the still image dataset, of the objects contained within each detection frame. In the embodiment, the first processing circuitry 101 calculates the center of the objects contained within each detection frame as the reference point on the still image dataset.

Fig. 6 is a schematic diagram illustrating the positions of the first vehicle 601 and the second vehicle 602, calculated by the data generation device 100 from the first still image dataset 921D_FRA shown in Fig. 5. As shown in Fig. 6, the first processing circuitry 101 sets the center of the first vehicle 601 on the first still image dataset 921D_FRA to a first center 1BC. Similarly, the first processing circuitry 101 sets the center of the second vehicle 602 on the first still image dataset 921D_FRA to a second center 2BC.

The first storage device 102 of the data generation device 100 stores data representing the dimensions and center positions of the first vehicle 601 and the second vehicle 602. The first processing circuitry 101 uses the data representing the dimensions and center position of the first vehicle 601, which are stored in the first storage device 102, and uses the position of the first center 1BC on the first still image dataset 921D_FRA to calculate a position 601oe of a first outer edge, which is the position of the outer edge of the first vehicle 601. Similarly, the first processing circuitry 101 uses the data representing the dimensions and center position of the second vehicle 602, which are stored in the first storage device 102, and uses the position of the second center 2BC on the first still image dataset 921D_FRA to calculate a position 602oe of a second outer edge, which is the position of the outer edge of the second vehicle 602. The first processing circuitry 101 calculates a first inter-vehicle distance 30_1, which is set between the position 601oe of the first outer edge and the position 602oe of the second outer edge. As shown in Fig. 6, the first inter-vehicle distance 30_1 is set between a front end 601oeF at the position of the first outer edge and a rear end 602oeR at the position of the second outer edge.

The first still image dataset 921D_FRA clearly shows the first vehicle 601 and the second vehicle 602. Therefore, the position of the first vehicle 601 in the real world matches the position 601oe of the first outer edge calculated by the first processing circuitry 101. Similarly, the position of the second vehicle 602 in the real world matches the position 602oe of the second outer edge calculated by the first processing circuitry 101. Accordingly, the first inter-vehicle distance 30_1 is equal to the distance between the first vehicle 601 and the second vehicle 602 in the real world. Thus, the first processing circuitry 101 determines that the first inter-vehicle distance 30_1 is the distance between the first vehicle 601 and the second vehicle 602 in the real world.

The data generation device 100 executes the process of step S14 to select, as reference data, a still image dataset that clearly shows the type of objects, the distance between the objects, and the capture time of the still image dataset, from the still image dataset contained in each of the first video dataset 921D, the second video dataset 922D, and the third video dataset 923D. In the embodiment, the first still image dataset 921D_FRA corresponds to the reference data. Whether the type of an object is clear is one aspect of the accuracy information. Whether the distance between objects is clear is one aspect of the accuracy information. Whether the capture time is clear is one aspect of the accuracy information. That is, the first processing circuitry 101 of the data generation device 100 selects the reference data based on the accuracy information.

In the process of step S15, the data generation device 100 determines whether it has selected reference data from the data contained in the observational datasets acquired from multiple roadside cameras 920. In the process of step S15, when the data generation device 100 fails to select reference data from the data included in the acquired observational datasets (step S15: NO), the data generation device 100 advances the process to step S100.

In step S100, the data generation device 100 skips the providing of the synchronized observational datasets to the controller 200, thereby terminating the series of processes.

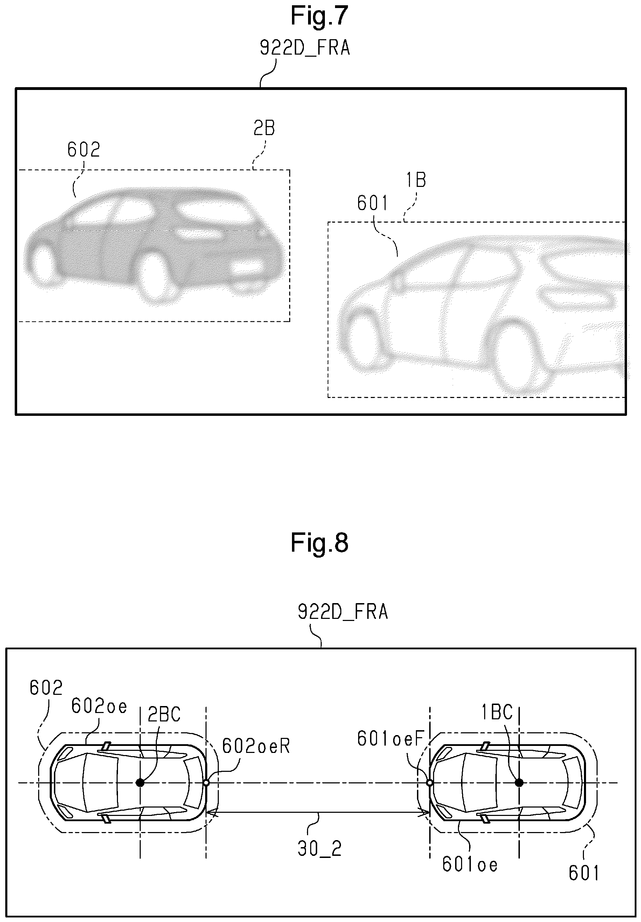

When the acquired observational datasets do not include a still image dataset that clearly shows the type of objects, the distance between the objects, and the capture time of the still image dataset, the data generation device 100 does not select reference data. For example, when the acquired observational datasets do not include a still image dataset that clearly shows the contours of the objects through edge processing, no reference data is selected. For example, Fig. 7 is an example of a still image dataset that does not clearly show the contours of the objects.

In the process of step S15, when the data generation device 100 selects reference data from the data included in the acquired observational datasets (step S15: YES), the data generation device 100 advances the process to step S16.

### Method for Selecting Still Image Data from Video Data Corresponding to Same Moment as Reference Data

In the process of step S16, the first processing circuitry 101 selects, from the video datasets that do not include the still image dataset selected as the reference data, a still image dataset showing a situation where the distance between two or more objects is equal to that distance in the reference data.

In the embodiment, the first processing circuitry 101 selects, from each of the second video dataset 922D and the third video dataset 923D, a still image data showing a situation where the distance between two or more objects is equal to that distance in the reference data. The process executed by the first processing circuitry 101 on the second video dataset 922D will now be described as an example.

In the process of step S16, the first processing circuitry 101 of the data generation device 100 analyzes multiple second still image datasets 922D_FRA of the second video dataset 922D. Thus, the first processing circuitry 101 determines whether the capture range of each second still image dataset 922D_FRA includes objects identical to the ones recorded in the first still image dataset 921D_FRA, which serves as the reference data. The method by which the first processing circuitry 101 executes this determination will now be described with reference to Figs. 7 and 8.

Fig. 7 illustrates the second still image dataset 922D_FRA. The second still image dataset 922D_FRA records the capture time at which the second roadside camera 922 obtained the second still image dataset 922D_FRA. The second still image dataset 922D_FRA, shown in Fig. 7, is blurrier than the first still image dataset 921D_FRA, shown in Fig. 5. That is, the contours of the first vehicle 601 and the second vehicle 602 captured in the second still image dataset 922D_FRA are blurry.

Through the process of step S14, a detection frame is set for each still image dataset included in the second video dataset 922D and the third video dataset 923D, and the objects in the detection frame are identified.

Fig. 7 illustrates the first detection frame 1B, which displays the first vehicle 601, and the second detection frame 2B, which displays the second vehicle 602.

Based on the information described above, the first processing circuitry 101 calculates the center position of the object contained within each detection frame as the reference point on the still image dataset, from the position of the detection frame in the still image data. In this case, the first processing circuitry 101 also uses the data representing the dimensions and center position of the object, which are stored in the first storage device 102. Further, the first processing circuitry 101 uses the position information of the object and the position information of the roadside camera 920, which are acquired by the controller 200. Thus, the first processing circuitry 101 calculates the center position, on the still image data, of the object contained within each detection frame in the still image data to align with the above-described information.

The first processing circuitry 101 selects a still image data for each video dataset where the distance between two or more objects is equal to that distance in the reference data.

Fig. 8 is a schematic diagram illustrating the positions of the first vehicle 601 and the second vehicle 602, calculated by the data generation device 100 from the second still image dataset 922D_FRA shown in Fig. 7. As shown in Fig. 8, the first processing circuitry 101 sets the center of the first vehicle 601 on the second still image dataset 922D_FRA to the first center 1BC. Similarly, the first processing circuitry 101 sets the center of the second vehicle 602 on the second still image dataset 922D_FRA to the second center 2BC.

The first processing circuitry 101 uses the data representing the dimensions and the center position of the first vehicle 601, which are stored in the first storage device 102, and uses the position of the first center 1BC on the second still image dataset 922D_FRA to calculate the position 601oe of the first outer edge, which is the position of the outer edge of the first vehicle 601. Similarly, the first processing circuitry 101 uses the data representing the dimensions and the center position of the second vehicle 602, which are stored in the first storage device 102, and uses the position of the second center 2BC on the second still image dataset 922D_FRA to calculate the position 602oe of the second outer edge, which is the position of the outer edge of the second vehicle 602. The first processing circuitry 101 calculates a second inter-vehicle distance 30_2, which is set between the position 601oe of the first outer edge and the position 602oe of the second outer edge in the second still image dataset 922D_FRA. As shown in Fig. 8, the second inter-vehicle distance 30_2 in the second still image data 922D_FRA is set between the front end 601oeF at the position of the first outer edge and the rear end 602oeR at the position of the second outer edge.

In the embodiment, the first inter-vehicle distance 30_1 in the first still image dataset 921D_FRA matches the second inter-vehicle distance 30_2 in the second still image dataset 922D_FRA. That is, the second still image dataset 922D_FRA shows a situation where the distance between two objects is equal to that distance in the first still image dataset 921D_FRA, which is the reference data.

From the data included in each observational dataset, the data generation device 100 selects the still image dataset that shows the situation equivalent to that of the reference data. Then, the data generation device 100 advances the process to step S18.

### Generation of Synchronized Observational Dataset

In step S18, the first processing circuitry 101 of the data generation device 100 calculates the magnitude of the deviation between the capture time of the reference data and the capture time of the still image dataset that indicates the same situation as that of the reference data in each observational dataset.

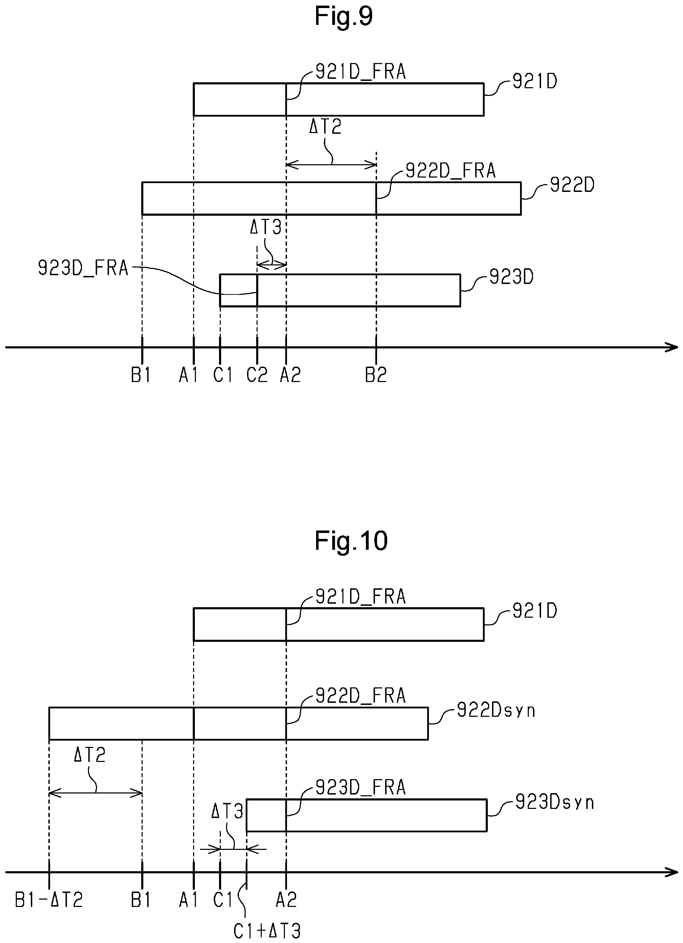

Fig. 9 is a schematic diagram illustrating the relationship between the video datasets before the synchronization process has been executed. In Fig. 9, the video datasets are arranged on the time axis according to the capture times recorded in the still image datasets that are included in each video dataset. The start time of the first video dataset 921D based on the capture time recorded in each still image dataset included in the first video dataset 921D is A1. The first video dataset 921D includes the first still image dataset 921D_FRA, which serves as the reference data. The capture time recorded in the first still image dataset 921D_FRA, which serves as the reference data, is A2.

The start time of the second video dataset 922D based on the capture time recorded in each still image dataset included in the second video dataset 922D is B1. The second video dataset 922D includes the second still image dataset 922D_FRA, which shows the same situation as that of the first still image dataset 921D_FRA, which serves as the reference data. The capture time recorded in the second still image dataset 922D_FRA is B2. The magnitude of the deviation between the capture time recorded in the first still image dataset 921D_FRA and the capture time recorded in the second still image dataset 922D_FRA is ΔT2.

The start time of the third video dataset 923D based on the capture time recorded in each still image dataset included in the third video dataset 923D is C1. The third video dataset 923D includes the third still image dataset 923D_FRA, which shows the same situation as the first still image dataset 921D_FRA, which serves as the reference data. The capture time recorded in the third still image dataset 923D_FRA is C2. The magnitude of the deviation between the capture time recorded in the first still image dataset 921D_FRA and the capture time recorded in the third still image dataset 923D_FRA is ΔT3.

The first processing circuitry 101 calculates, for each video dataset, the magnitude of the deviation between the capture time recorded in the reference data and the capture time recorded in the still image dataset that indicates a situation equivalent to that of the reference data. Then, the first processing circuitry 101 advances the process to step S19.

In step S19, the data generation device 100 uses the magnitude of the deviation between the above-described capture times calculated for the video datasets in step S18 to offset the start time of the video dataset. As a result, the data generation device 100 generates a synchronized observational dataset by synchronizing the video datasets with a video dataset that includes reference data. Specifically, the data generation device 100 synchronizes observational datasets such that the still image datasets illustrating the situation in which the distance between two or more objects is equal to that in the reference data are treated as a still image dataset at the same point in time. In this case, these still image datasets are included in each of the observational datasets.

Fig. 10 is a schematic diagram illustrating the synchronized observational dataset. As shown in Fig. 9, the magnitude of the deviations between the capture times of the first still image dataset 921D_FRA, which serves as the reference data, and the second still image dataset 922D_FRA, which shows a situation equivalent to that of the reference data in the second video dataset 922D, is ΔT2. As shown in Fig. 10, the first processing circuitry 101 offsets the start time of the second video dataset 922D by a period corresponding to ΔT2 earlier. Specifically, the first processing circuitry 101 generates a synchronized second video dataset 922Dsyn by updating, to a value offset by the amount of time that corresponds to ΔT2, the capture time recorded in the still image dataset contained in the second video dataset 922D. As a result, the capture time recorded in the second still image dataset 922D_FRA, which is contained in the synchronized second video dataset 922Dsyn, is A2, which is the same as the capture time of the first still image dataset 921D_FRA. The start time of the synchronized second video dataset 922Dsyn is B1-ΔT2.

Similarly, the magnitude of the deviations between the capture times of the first still image dataset 921D_FRA, which serves as the reference data, and the third still image dataset 923D_FRA, which shows a situation equivalent to that of the reference data in the third still image dataset 923D, is ΔT3. As shown in Fig. 10, the first processing circuitry 101 offsets the start time of the third video dataset 923D by a period corresponding to ΔT3 later. Specifically, the first processing circuitry 101 generates a synchronized third video dataset 923Dsyn by updating, to a value offset by the amount of time that corresponds to ΔT3, the capture time recorded in the still image dataset contained in the third video dataset 923D. As a result, the capture time recorded in the third still image dataset 923D_FRA, which is contained in the synchronized third video dataset 923Dsyn, is A2, which is the same as the capture time of the first still image dataset 921D_FRA. The start time of the synchronized third video dataset 923Dsyn is C1+ΔT3.

In this manner, the data generation device 100 synchronizes multiple observational datasets such that the data indicating the same situation as the reference data is treated as data at the same point in time, thereby generating a synchronized observational dataset.

The first processing circuitry 101 generates the synchronized second video dataset 922Dsyn and the synchronized third video dataset 923Dsyn, and then advances the process to step S20.

In the process of step S20, the data generation device 100 sends the first video dataset 921D, the synchronized second video dataset 922Dsyn, and the synchronized third video dataset 923Dsyn to the controller 200 via the first communication device 103.

After executing the process of step S20, the data generation device 100 terminates the series of processes.

### Providing Traffic Services Using Synchronized Observational Dataset

The second processing circuitry 201 of the controller 200 receives multiple synchronized observational datasets from the data generation device 100 via the second communication device 203. The controller 200 generates predicted moving body information using the moving body information stored in the second storage device 202 and using the synchronized observational datasets received from the data generation device 100. The controller 200 generates control signals based on the generated predicted moving body information. The controller 200 sends the generated control signals to the providing device 300.

Based on the control signals received from the controller 200 via the third communication device 303, the third processing circuitry 301 of the providing device 300 provides traffic services to the user 20 of the providing device 300.

### Operation of Present Embodiment

The data generation device 100 uses the first still image dataset 921D_FRA, which clearly shows the distance between the first vehicle 601 and the second vehicle 602, as reference data. The data generation device 100 synchronizes the second video dataset 922D such that the second still image data 922D_FRA, which indicates the moment at which the distance between the first vehicle 601 and the second vehicle 602 is equal to that in the reference data, is treated as data at the same point in time as the reference data. Similarly, the data generation device 100 synchronizes the third video dataset 923D based on the reference data. That is, the data generation device 100 synchronizes multiple observational datasets based on a highly accurate reference observational dataset.

### Advantages of Present Embodiment

(1) The data generation device 100 synchronizes observational datasets while limiting a decrease in the accuracy in each observational dataset.
(2) If an object is clearly captured in a still image dataset, the contours of the object are identifiable. As a result, the distance between two or more objects is clear. The first processing circuitry 101 of the data generation device 100 selects the first still image dataset 921D_FRA, in which the object is clearly captured, as reference data. This allows the data generation device 100 to synchronize observational datasets using, as the reference data, the still image dataset that clearly shows the distance between the first vehicle 601 and the second vehicle 602.
(3) The data generation device 100 includes the first storage device 102. The first storage device 102 stores data representing the center position and dimensions of each of the objects. The center of each object serves as a reference point. Based on the stored data, the first processing circuitry 101 of the data generation device 100 identifies even a blurry object in the still image data 922D_FRA through image recognition processing and identifies the center of the object on the still image data 922D_FRA. The first processing circuitry 101 determines the position of the outer edge of the object with reference to the data representing the center position and dimensions of the object and with reference to the center of the object on the still image dataset identified as the reference point. The first processing circuitry 101 calculates the distance between two objects based on the information related to the position of the outer edge. By executing such processes, even if the objects captured in a still image data are blurry, the first processing circuitry 101 of the data generation device 100 determines the distance between two objects captured in the still image dataset. Thus, when synchronizing the reference data with observational datasets other than the reference data, the first processing circuitry 101 more easily determines the observational dataset that should be treated as the data at the same point in time as the reference data.
(4) The greater the deviation between the time at which an observational dataset was obtained and the time in the predicted moving body information calculated using the obtained observational dataset, the older the data used for calculating the predicted moving body information. Thus, the greater the deviation between the time at which an observational dataset was obtained and the time in the predicted moving body information calculated using the obtained observational dataset, the more uncertain the calculated predicted moving body information. When the first processing circuitry 101 of the data generation device 100 fails to select reference data from the data contained in the observational data acquired from multiple roadside cameras 920 over a predetermined period of time (step S15: NO), it does not generate a synchronized observational dataset. As a result, the data generation device 100 skips the generation of synchronized observational datasets that include outdated information that may make the predicted moving body information uncertain when used for calculation.
(5) The data generation method executed by the data generation device 100 includes the step (step S11) in which the data generation device 100 obtains observational datasets from the sensors via the first communication device 103 over the predetermined period of time. In this case, the datasets are obtained by continuously observing two or more objects that have a changing distance between them from different positions. The data generation method executed by the data generation device 100 includes the step (step S14) in which the first processing circuitry 101 selects, as reference data, data that clearly shows the distance between two or more objects from the observational datasets. The data generation method executed by the data generation device 100 includes the step (step S19) in which the first processing circuitry 101 uses the reference data to synchronize the observational datasets to generate a synchronized observational dataset. In this case, the synchronized observational datasets each include data indicating a situation in which the distance between two or more objects is equal to that distance in the reference data, and the data is treated as data obtained at the same point in time as that of the reference data. The generated synchronized observational dataset is used to calculate the predicted moving body information corresponding to a point in time after the observational datasets were acquired.

By executing such a data generation method, the first processing circuitry 101 of the data generation device 100 refers to the data that clearly shows the distance between two or more objects to synchronize observational datasets such that the data in which the moment when the distance between the two or more objects is equal is treated as the data obtained at the same point in time. That is, the data generation device 100 synchronizes observational datasets with reference to a highly accurate reference observational dataset. The data generation method allows the data generation device 100 to synchronize observational datasets while limiting a decrease in the accuracy in each observational dataset.

(6) The first storage device 102 of the data generation device 100 stores a data generation program that instructs the first processing circuitry 101 to execute processes. The data generation program causes the first processing circuitry 101 of the data generation device 100 to execute obtaining observational datasets from the sensors via the first communication device 103 over the predetermined period of time. In this case, the datasets are obtained by continuously observing two or more objects that have a changing distance between them from different positions. The data generation program causes the first processing circuitry 101 to select, as reference data, the data that clearly shows the distance between two or more objects from multiple observational datasets. The data generation program causes the first processing circuitry 101 to use the reference data to synchronize observational datasets, thereby generating a synchronized observational dataset. In this case, the synchronized observational datasets each include data indicating a situation in which the distance between two or more objects is equal to that distance in the reference data, and the data is treated as data obtained at the same point in time as that of the reference data. The generated synchronized observational dataset is used to calculate the predicted moving body information corresponding to a point in time after the observational datasets were acquired. In other words, the data generation program causes the first processing circuitry 101 of the data generation device 100 to synchronize multiple observational datasets with reference to the data that clearly shows the distance between two or more objects such that the data in which the moment when the distance between the two or more objects is equal is treated as the data obtained at the same point in time. That is, the data generation program causes the data generation device 100 to synchronize the synchronization process with reference to a highly accurate reference observational dataset. The data generation program allows the data generation device 100 to synchronize observational datasets while limiting a decrease in the accuracy in each observational dataset.

(7) The traffic service providing system 10 provides traffic services to the user 20 of the providing device 300 based on the predicted moving body information generated using the synchronized observational dataset generated by the data generation device 100. The synchronized observational dataset generated by the data generation device 100 is synchronized with reference data that clearly shows the distance between two or more objects, and is thus highly accurate. This increases the accuracy of the predicted moving body information generated by the controller 200 based on the highly accurate synchronized observational dataset. Thus, the traffic service providing system 10 provides the user 20 of the providing device 300 with traffic services that are based on high-quality predicted moving body information generated using the highly accurate synchronized observational dataset.

### Modifications

The present embodiment may be modified as follows. The present embodiment and the following modifications can be combined as long as they remain technically consistent with each other.

The data acquired by the data generation device 100 as an observational dataset obtained through continuous observation is not limited to a video dataset. For example, the data generation device 100 may acquire a collection of point cloud datasets obtained from a LiDAR sensor and arranged in chronological order, as an observational dataset obtained through continuous observation.

In observational datasets acquired by the first communication device 103 of the data generation device 100, at least one of the data type, image resolution, observation period, and observation duration may differ for each observational dataset.

The first processing circuitry 101 of the data generation device 100 may synchronize different types of observational datasets. For example, the first processing circuitry 101 may synchronize a video dataset acquired from a camera sensor with a collection of point cloud datasets acquired from a LiDAR sensor and arranged in chronological order.

When selecting reference data, the data generation device 100 may select the reference data from the data that is included in the observational datasets obtained from sensors which satisfy a predetermined condition. For example, the data generation device 100 may select one still image dataset as the reference data from the still image datasets included in the video dataset acquired from a roadside camera 920 with an image resolution that is greater than or equal to a predetermined threshold value. The image resolution is one aspect of accuracy information. For example, the data generation device 100 may select one point cloud dataset as reference data from those included in a collection of point cloud datasets that are arranged in chronological order and acquired from a LiDAR sensor with the resolution of observation accuracy that is greater than a predetermined standard. The resolution of observation accuracy is one aspect of accuracy information.

The data generation device 100 may acquire an observational dataset from a sensor mounted on a moving body 800. The data generation device 100 may acquire information indicating the status of the moving body 800 equipped with the sensor when acquiring an observational dataset from the sensor mounted on the moving body 800. The information indicating the status of the moving body 800 includes, for example, the speed of the moving body 800 and the position of the moving body 800. For example, the data generation device 100 may obtain a video dataset from an external camera mounted on the vehicle 600. The data generation device 100 may obtain information related to at least one of the speed and position of the vehicle 600, in addition to the video dataset, from the vehicle 600.

The accuracy information used by the first processing circuitry 101 of the data generation device 100 to select reference data may be whether the front end of a first object and the edge of a second object located in front of the first object in the direction facing the first object are recognizable. For example, the first processing circuitry 101 may select reference data on the condition that a first front end 601P of the first vehicle 601 and a second rear end 602P of the second vehicle 602, as shown in Fig. 4, are recognizable. The distance between the first front end 601P and the second rear end 602P is equal to the distance between the first vehicle 601 and the second vehicle 602. Thus, even if the first processing circuitry 101 selects the reference data based on the above-described condition, the data generation device 100 provides advantages equivalent to those of the embodiment.

The reference point is not limited to the center of the object contained within a detection frame. For example, the first front end 601P and the second rear end 602P, as shown in Fig. 4, are reference points in a modification.

The accuracy information used by the first processing circuitry 101 of the data generation device 100 to select reference data may be whether characters written on an object are readable. For example, the first processing circuitry 101 may select reference data on the condition that the characters written on the object captured in a still image data are readable. When the characters written on the object captured in the still image data are readable, the still image data is clear. Thus, even if the first processing circuitry 101 sets the above-described condition as a condition for selecting reference data, the data generation device 100 provides advantages equivalent to those of the embodiment.

The accuracy information used by the first processing circuitry 101 of the data generation device 100 to select reference data may be whether the S/N ratio of a still image dataset or a point cloud dataset is greater than a predetermined value. For example, the first processing circuitry 101 may select the reference data on the condition that the S/N ratio of a still image data or point cloud dataset is greater than or equal to the predetermined value. The still image data or point cloud dataset with a S/N greater than or equal to the predetermined value is clear data with relatively little noise. Thus, even if the first processing circuitry 101 sets the above-described condition as a condition for selecting reference data, the data generation device 100 provides advantages equivalent to those of the embodiment.

In the embodiment, the data generation device 100 generates synchronized observational datasets by offsetting the start time for each observational dataset. The method for synchronizing observational datasets is not limited to the one described in the embodiment. For example, the data generation device 100 may add, to an observational data, offset amount data that is necessary to synchronize the observational dataset, and then send the synchronized observational dataset to the controller 200.

Instead, for example, the data generation device 100 may generate a new synchronized observational dataset based on reference data and multiple synchronized observational datasets. That is, the data generation device 100 may generate a synchronized observational dataset that includes multiple synchronized observational datasets obtained from different positions.

The data generation device 100 and the controller 200 of the traffic service providing system 10 may be a single device. That is, the data generation device 100 may have the features of the controller 200 in the embodiment. In this case, the traffic service providing system 10 includes multiple providing devices 300, a data generation device 100, and multiple roadside sensors 900.

The services offered by the traffic service providing system 10 to the user 20 via the vehicle 600 may be employed in various advanced safety technologies. Examples of advanced safety technologies include pre-crash safety (PCS), adaptive cruise control (ACC), lane keeping assist (LKA), and lane change assist (LCA).

Various changes in form and details may be made to the examples above without departing from the spirit and scope of the claims and their equivalents. The examples are for the sake of description only, and not for purposes of limitation. Descriptions of features in each example are to be considered as being applicable to similar features or aspects in other examples. Suitable results may be achieved if sequences are performed in a different order, and/or if components in a described system, architecture, device, or circuit are combined differently, and/or replaced or supplemented by other components or their equivalents. The scope of the disclosure is not defined by the detailed description, but by the claims and their equivalents. All variations within the scope of the claims and their equivalents are included in the disclosure.

## Claims

1. A data generation device (100), comprising:
a communication device (103); and
processing circuitry (101), wherein
the communication device (103) is configured to obtain, from sensors (921, 922, 923), observational datasets (921D, 922D, 923D) that have been obtained by continuously observing an object (601, 602) from different positions,
the processing circuitry (101) is configured to select reference data (921D_FRA) based on accuracy information related to the observational datasets (921D, 922D, 923D), and generate a synchronized observational dataset (921D, 922Dsyn, 923Dsyn) by synchronizing the observational datasets (921D, 922D, 923D) with each other based on the reference data (921D_FRA), and
the synchronized observational dataset (921D, 922Dsyn, 923Dsyn) is configured to be used to calculate a position of the object (601, 602) corresponding to a point in time after the observational datasets (921D, 922D, 923D) were obtained.

2. The data generation device (100) according to claim 1, wherein the communication device (103) is configured to obtain, as the observational datasets, video datasets (921D, 922D, 923D) obtained by capturing two or more objects (601, 602) from different positions, wherein a distance (30_1, 30_2) between the two or more objects (601, 602) is changing, and
the processing circuitry (101) is configured to select, as the reference data, from still image datasets (921D_FRA, 922D_FRA, 923D_FRA) included in each of the video datasets (921D, 922D, 923D), a still image dataset (921D_FRA, 922D_FRA, 923D_FRA) in which each of the objects has a resolution that is greater than or equal to a threshold value.

3. The data generation device (100) according to claim 2, wherein the processing circuitry (101) is configured to calculate a distance (30_1, 30_2) between two of the objects (601, 602) based on a reference point (1BC, 2BC; 601P, 602P), the reference point (1BC, 2BC; 601P, 602P) being set for each of the objects (601, 602).

4. The data generation device (100) according to claim 3, further comprising a storage device (102) configured to store data representing dimensions of the objects (601, 602) categorized by type and data representing a position of the reference point (1BC, 2BC; 601P, 602P) set for each of the objects (601, 602), and
the processing circuitry (101) is configured to:
detect the object (601, 602) captured in the obtained still image dataset (921D_FRA, 922D_FRA, 923D_FRA);
identify a type of the detected object through image recognition processing;
identify the reference point of the object (601, 602) on the still image dataset (921D_FRA, 922D_FRA, 923D_FRA) with reference to the data representing the dimensions of the objects (601, 602) categorized by type and the data representing the position of the reference point (1BC, 2BC; 601P, 602P) set for each of the objects (601, 602), wherein the data representing the dimensions and the data representing the position are stored in the storage device (102);
calculate a position of an outer edge (601oeF, 602oeR) of the detected object (601, 602) with reference to the identified reference point (1BC, 2BC; 601P, 602P) of the object (601, 602) on the still image dataset (921D_FRA, 922D_FRA, 923D_FRA) and with reference to the data representing the dimensions of the object (601, 602) and the data representing the position of the reference point (1BC, 2BC; 601P, 602P); and
calculate a distance (30_1, 30_2) between two different ones of the objects (601, 602) based on information related to the calculated position of the outer edge (601oeF, 602oeR).

5. The data generation device (100) according to claim 2, wherein the processing circuitry (101) is configured to skip generation of the synchronized observational dataset (921D, 922Dsyn, 923Dsyn) when failing to acquire the observational dataset (921D) containing the reference data (921D_FRA) within a predetermined period of time.

6. A data generation method, comprising:
obtaining, from sensors (921, 922, 923), observational datasets (921D, 922D, 923D) that have been obtained by continuously observing an object (601, 602) from different positions;
selecting reference data (921D_FRA) based on accuracy information related to the observational datasets (921D, 922D, 923D); and
generating a synchronized observational dataset (921D, 922Dsyn, 923Dsyn) by synchronizing the observational datasets (921D, 922D, 923D) with each other based on the reference data (921D_FRA), wherein
the synchronized observational dataset (921D, 922Dsyn, 923Dsyn) is configured to be used to calculate a position of the object (601, 602) corresponding to a point in time after the observational datasets (921D, 922D, 923D) were obtained.

7. A data generation program, wherein
the data generation program is configured to cause a communication device (103) to execute obtaining, from sensors (921, 922, 923), observational datasets (921D, 922D, 923D) that have been obtained by continuously observing an object (601, 602) from different positions,
the data generation program is configured to cause processing circuitry (101) to execute:
selecting reference data (921D_FRA) based on accuracy information related to the observational datasets (921D, 922D, 923D); and
generating a synchronized observational dataset (921D, 922Dsyn, 923Dsyn) by synchronizing the observational datasets (921D, 922D, 923D) with each other based on the reference data (921D_FRA), and
the synchronized observational dataset (921D, 922Dsyn, 923Dsyn) is configured to be used to calculate a position of the object (601, 602) corresponding to a point in time after the observational datasets (921D, 922D, 923D) were obtained.

8. A traffic service providing system (10), comprising:
the data generation device (100) according to claim 1;
a controller (200); and
providing devices (300), wherein
the data generation device (100) is configured to:
obtain the observational datasets (921D, 922D, 923D) from the sensors (921, 922, 923);
generate the synchronized observational dataset (921D, 922Dsyn, 923Dsyn) by synchronizing the observational datasets (921D, 922D, 923D) with each other; and
send the synchronized observational dataset (921D, 922Dsyn, 923Dsyn) to the controller (200),
the controller (200) is configured to generate predicted moving body information using the received synchronized observational dataset (921D, 922Dsyn, 923Dsyn), and
the controller (200) and the providing devices (300) are configured to communicate with each other, thereby providing a traffic service that assists a user (20) of each of the providing devices (300) based on the predicted moving body information.
